# EUROPEAN PATENT SPECIFICATION

(11) **EP 3 223 419 B1**
(45) Date of publication and mention of the grant of the patent: **01.05.2019**
(21) Application number: 16161612.3
(22) Date of filing: 22.03.2016
(51) Int. Cl.: H02M 5/297, H02J 3/34, H02M 5/16, H02M 7/483, H02M 5/293

(54) **DIRECT AC-AC CONVERTER ASSEMBLY AND CONVERSION SYSTEM USING SAME**
DIREKTE WECHSELSTROM-WECHSELSTROM-WANDLERANORDNUNG UND WANDLERSYSTEM DAMIT
ENSEMBLE CONVERTISSEUR AC-AC DIRECT ET SYSTÈME DE CONVERSION UTILISANT CELUI-CI

(43) Date of publication of application: 27.09.2017
(73) Proprietor: GE Energy Power Conversion Technology Ltd, Rugby Warwickshire CV21 1BU (GB)
(72) Inventor: BASIC, Duro, 12277 Berlin (DE); BRANDT, Axel, 12277 Berlin (DE)
(74) Representative: Rüger Abel

(56) References cited:
- DE-A1-102014 100 257
- US-A1- 2015 236 611
- GLINKA M ET AL: "A new ac/ac-multilevel converter family applied to a single-phase converter", PROCEEDINGS / THE FIFTH INTERNATIONAL CONFERENCE ON POWER ELECTRONICS AND DRIVE SYSTEMS, PEDS 2003 : 17 - 20 NOVEMBER 2003, NOVOTEL APOLLO HOTEL, SINGAPORE, IEEE, PISCATAWAY, NJ, USA, vol. 1, 17 November 2003 (2003-11-17), pages 16-23, XP010694784, DOI: 10.1109/PEDS.2003.1282669 ISBN: 978-0-7803-7885-8
- MANFRED WINKELNKEMPER ET AL: "A modular direct converter for transformerless rail interties", INDUSTRIAL ELECTRONICS (ISIE), 2010 IEEE INTERNATIONAL SYMPOSIUM ON, IEEE, PISCATAWAY, NJ, USA, 4 July 2010 (2010-07-04), pages 562-567, XP031803419, ISBN: 978-1-4244-6390-9
- FELIX KAMMERER ET AL: "A novel cascaded vector control scheme for the Modular Multilevel Matrix Converter", IECON 2011 - 37TH ANNUAL CONFERENCE ON IEEE INDUSTRIAL ELECTRONICS SOCIETY, IEEE, 7 November 2011 (2011-11-07), pages 1097-1102, XP032104636, DOI: 10.1109/IECON.2011.6119461 ISBN: 978-1-61284-969-0

## Description

### FIELD OF THE INVENTION

This invention relates generally to power converters and more specifically to a direct alternating current to alternating current (AC-AC) converter assembly for transferring AC-AC power between a first three phase grid and a second single phase grid and a direct AC-AC conversion system using such a direct AC-AC converter assembly. Such assemblies and systems can be beneficially used for interties between railway and power system grids or as railway catenary power supplies.

### BACKGROUND OF THE INVENTION

Railway grid couplings are used to connect three phase utility grids, such as 50 Hz or 60 Hz power grids, with single phase railway grids, which are usually 16.66 Hz or 25 Hz grids. Different power electronic topologies and converters have been used for that purpose. One approach utilizes converters with a centralized direct current (DC) link. Independent voltage source inverters operate on that common DC link and generate the three phase and single phase grid voltages. Another approach is based on several independent voltage source inverters, substantially similar to the first approach. The railway side converters, such as 4-quadrant (4QS) converters, are connected in series in order to build up the single phase railway voltage.

Further development in the AC-AC conversion has been based on a classical modular multilevel converter (MMC) technology. An MMC converter comprises a number of phase arms or phase modules consisting of two power converter arms connected in series to each other, each power converter arm comprising a number of identical cells (submodules). Each submodule is formed by a 2 quadrant chopper circuit having controllable power semiconductor switches, like IGBTs, IGCTs, GTOs, and the like, and an internal capacitor for storing electrical energy. The chopper circuit is conventionally a half bridge having two controllable power semiconductor switches connected in series. A freewheeling diode is associated to each switch and connected in antiparallel thereto. Due to the modular configuration, the power converter is individually scalable for different powers and applications. The voltages and currents at the auxiliary current (AC) side and the direct current (DC) side can be controlled in a high dynamic and widely decoupled manner.

The AC-AC converters based on the classical MMC technology are composed of two AC-DC MMC converters connected back to back via their DC terminals. Due to the intermediate DC conversion stage, this topology can be regarded as indirect AC-AC converter (AC-DC-AC). For relatively low railway grid frequencies of 16.66 Hz, for example, the intermediate DC conversion produces large capacitor voltage ripples which are undesired and need to be avoided.

In order to eliminate the intermediate DC conversion step, a direct AC-AC conversion based on the MMC technology has been proposed. Here, the MMC converter is constructed by so called full H bridge cells or submodules which each comprise two parallel half bridge arms, each having two semiconductor power switches connected in series to each other and a freewheeling diode connected in antiparallel to each switch. The direct AC-AC conversion topology consists of two converter stars, each formed by 3 converter arms, so that the converter is also known as a double star (DS) converter. The double star converter comprises a total of 6 converter arms and also incorporates 6 arm reactors for current smoothing purposes and to reduce switching ripple and to enable controllability of the currents which inevitably circulate through the converter arms during operation and must be actively controlled.

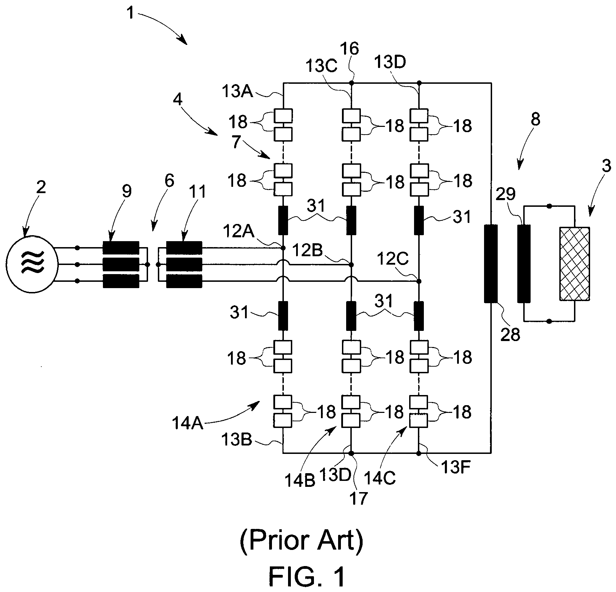

In the application for interties between railway and power system grids, the railway grid voltage is generated between the two star points of the double star direct AC-AC converter (Fig. 1). Two separate transformers adapt the converter voltage level to the level of the three phase power and single phase railway grids. If the grid voltage level is identical to the converter voltage level a transformer can be replaced by a reactor taking over the functionality of the transformer's leaking inductivity. This topology can also be used as grid coupling between a 110 kV / 50 Hz grid and a 15 kV / 16.66 Hz catenary without a single phase transformer.

The MMC technology allows to provide relatively low cost direct conversion systems, since standard H bridge converters and simple transformer configurations can be used. The direct conversion results in the MMC converter efficiency being relative high. A drawback is, however, the high number of converter arms and arm reactors. Further, due to relatively large arm inductances required and the energy stored in them, in fault cases when the converter is tripped (blocked) overvoltage stresses at the transformer terminals are more severe. It is desired to reduce complexity of the MMC topology when used for direct conversion and to reduce overvoltage stress in fault cases.

DE 10 2014 100 257 A1 describes a converter assembly for transferring power between a first three phase grid and a second grid which may be a single phase AC grid or a DC grid. The converter assembly comprises a star MMC converter and a transformer arrangement. The star MMC converter comprises a total of three converter arms which are connected at first ends to each other forming a first star point connected to a first line of the second grid. Each converter arm has a series connection of a plurality of submodules in the form of half bridge or full H bridge cells comprising controllable power semiconductor switches. The transformer arrangement is for coupling the MMC converter to the first and second grids and comprises a first set of three phase windings connected in star topology. The windings are each connected at one side to respective one of said second ends of the MMC converter arms and at another side to each other forming a second star point connected to a second line of the second grid. A control device controls operation of the converter assembly to cause each converter arm to synthesize an AC voltage corresponding to respective phase voltage of the three-phase system superimposed with a DC voltage which serves for the energy transfer from the submodules to the second grid or vice versa. For high-voltage direct current power transmission applications two such converter assemblies are arranged in a back-to-back configuration.

Glinka M. et al.: "A New AC/AC-Multilevel Converter Family Applied to a Single-Phase Converter", in PROCEEDINGS / THE FIFTH INTERNATIONAL CONFERENCE ON POWER ELECTRONICS AND DRIVE SYSTEMS, PEDS, 2003, describes a converter topology, wherein a single phase AC/AC-modular multilevel converter (M²LC) feeds directly a compact medium-frequency transformer out of a 15kV/16²/₃Hz power line. The single-phase M²LC consists of four identical multilevel converter arms. Each converter arm includes N identical submodules which each contain full-bridges and associated DC-storage capacitors. The converter can be adapted to different voltage and power levels and enables four-quadrant operation.

In view of the foregoing, it is an object of present invention to provide a direct AC-AC converter assembly which enables AC-AC power transfer between a three phase grid and a single phase grid of different frequencies and having a simple structure of reduced complexity which may also allow to reduce cost associated with the implementation and operation of the converter and to reduce potential overvoltage stresses in fault cases.

It is a further object of present invention to provide a direct AC-AC conversion system comprising such an AC-AC converter assembly.

### BRIEF DESCRIPTION OF THE INVENTION

In order to solve this object, present invention provides an AC-AC converter assembly having the features of independent claim 1 and an AC-AC conversion system as claimed in independent claim 14. Preferred embodiments of present invention are subject-matter of the dependent claims.

According to one aspect of present invention, an AC-AC converter assembly for transferring AC-AC power between a first three phase grid and a second single phase grid, wherein the first and second grids have different nominal frequencies, is provided. The AC-AC converter assembly comprises one single star Modular Multilevel Converter (MMC) and a transformer arrangement. The single star MMC converter comprises a total of three converter arms which are connected at first ends to each other forming a first neutral or star point of the AC-AC converter assembly. Each converter arm has a plurality of bridge submodules or cells connected in series between said first end and a second end, each bridge submodule comprising controllable power semiconductor switches. The transformer arrangement is for coupling the MMC converter to the first and second grids and comprises a first set of three phase windings connected in star topology. The windings are each connected at one side to respective one of said second ends of the MMC converter arms and at another side to each other forming a second neutral or star point of the AC-AC conversion device. The AC-AC converter assembly further comprises a control device for controlling operation of the AC-AC converter assembly. The control device is configured to control the MMC converter to produce a common mode voltage component at the second grid frequency and a differential positive and/or negative sequence voltage component at the first grid frequency

The AC-AC converter assembly is based on a direct AC-AC conversion using the MMC technology thereby avoiding the problems or deficiencies associated with indirect conversions or intermediate DC conversion steps. The transformer arrangement provides the basis for coupling the MMC converter to both AC grids but also for decoupling them mutually to allow simultaneous voltage matching and frequency conversion therebetween. The transformer arrangement provides one star point of the direct AC-AC converter assembly magnetically. The second star point is realized by the single MMC converter which consists of only 3 arms instead of 6 arms used in the conventional double star MMC converter. Between both star points the single phase voltage required for the second grid is generated. Arm reactors are not needed in this arrangement and can be omitted. The leakage inductance of the transformer serves as smoothing inductance. The complexity of the topology can be reduced which also reduces cost of implementation and operation. Transient overvoltage stress during faults is reduced due to lower energy stored in inductances compared to the arm reactors in the double star MMC converters. Furthermore, due to the reduced number of converter arms, the single star MMC can be scaled more easily and appropriately to a desired nominal power in steps of 3 modules only instead of 6 modules as with the double star MMC. Moreover, circulating currents among arms are eliminated with the single star converter configuration. The control device, which is configured to control the MMC converter to produce the desired common mode voltage component at the second grid frequency and the desired differential positive and/or negative sequence voltage component at the first grid frequency, enables decoupled control actions optimized for meeting the respective requirements of the first and second grids.

To facilitate the direct conversion, the submodules of the MMC converter are preferably formed by H or full bridge cells which each comprise a first series connection of two power semiconductor switches, preferably IGBTs or similar controllable semiconductor devices, like IGCTS, GTOs, MOSFETs, etc., a second series connection of two power semiconductor switches connected in parallel to the first series connection, and a capacitor connected in parallel to the first and second series connections. A freewheeling diode may be assigned to each power semiconductor switch and connected in antiparallel thereto. Other submodule configurations now known or later developed, which allow bidirectional currents/voltages and energy flow, like mixed cells, asymmetrical cells, cross-connected cells, clamped double commutation cells, and the like, may also be used.

The transformer arrangement may further comprise a second set of three phase windings for connection to the first grid, wherein the second set of three phase windings may be inductively coupled to the first set of three phase windings.

In particular, the second set of three phase windings may advantageously be connected in star topology and lack a neutral connection. In this manner, the zero sequence voltage induced in this set of windings may be isolated and only the differential mode positive and optionally negative sequence voltages induced in the first grid side winding may be made available as the first grid voltage at its terminals.

In addition, the transformer arrangement may further comprise a third set of three phase windings for connection to the second grid, wherein said third set of three phase windings may be inductively coupled to the first set of three phase windings.

In a preferred embodiment, the third set of three phase windings may be connected in series forming an open delta topology. As a result, the voltage available at the terminals of the open delta connected windings is three times the zero sequence voltage induced in each phase winding, which can be made to match the required second grid voltage, whereas the differential mode positive or negative sequence voltages induced in this set of windings sums up to zero. Thus, the differential positive or negative sequence and zero systems can be fully decoupled thereby allowing decoupling of the control actions of the MMC converter required for the different grids.

In addition, it may be advantageous to interconnect the neutral point of the MMC converter, i.e. the first star point of the AC-AC converter assembly, and the neutral point of the first set of three phase windings, i.e. the second star point of the AC-AC converter assembly to provide a 4 wire connection between the transformer arrangement and the MMC converter. This allows the converter assembly to control simultaneously the differential positive (and possibly negative) sequence AC voltages and currents at the first grid frequency and the zero sequence voltages and current at the second grid frequency.

The transformer arrangement may form any three phase three winding transformer structure capable to provide a zero sequence flux path.

In a preferred configuration, the transformer arrangement may form a single 5 limb 3 winding transformer structure which has a magnetic core comprising five limbs, wherein the windings of the first through third sets of three phase windings may be arranged coaxially and/or concentrically to each other around three of the five limbs of the magnetic core. The remaining two limbs are preferably intended to form a zero sequence flux path. With such a configuration, the two transformers normally required for adaptation to the first and the second grid levels can be merged into a single component, further reducing number of components and space requirement.

In an alternative configuration, the transformer arrangement of any above-mentioned AC-AC converter assembly may comprise a first three phase differential voltage transformer for coupling the single star MMC converter to the first grid and a separate single phase common mode voltage transformer for coupling the single star MMC converter to the second grid. The three phase transformer may be any standard 3 limb transformer, for example. The single phase transformer may be connected between the first and second star or neutral points of the AC-AC converter assembly and may have any suitable type of magnetic core, like C-I, E-I, Double C, for example, and winding arrangement now known or later developed to optimize single phase transformer design.

In any above-mentioned AC-AC converter assembly, the number of turns of the first and second grid side winding, respectively, with respect to the number of turns of the MMC converter winding may be suitably selected to achieve voltage matching between the voltage levels of the MMC converter and those of the first and second grid, respectively. In this way, the converter can properly control the first grid side voltage by control of the differential mode voltage component in the arm converter voltages and the second grid side voltage by control of the common mode voltage component in the arm converter voltages.

In a preferred application, the direct AC-AC converter assembly of any type mentioned above may be used as an intertie between a 3 phase power grid with a typical grid frequency of about 50Hz or 60Hz and a single phase railway grid with a frequency which differs from the power grid frequency, like a typical railway grid frequency of about 16.66 Hz or 25 Hz. Both grids may have the same nominal grid voltage of 110 kV, for example, but may also have differing grid voltages, if desired, and need not necessarily be high voltages. It is understood that other grid voltage magnitudes and frequencies may be used than those mentioned above.

In a further alternative configuration, the transformer arrangement of any above-mentioned AC-AC converter assembly may comprise a first three phase differential voltage transformer, in particular a three limb transformer, for coupling the single star MMC converter to the first grid, but lack a single phase transformer for connection to the second grid. Rather, the first and second neutral points of the AC-AC converter assembly may be arranged as terminals for direct connection to the second grid. This configuration may be used to directly supply the railway catenary line, for example. In this application, the MMC converter voltage can be matched to the catenary voltage by controlling the power semiconductor switches of the submodules of the MMC converter only without any transformation required. Only transformation from the high voltage power grid is required, whereas the catenary can be directly supplied by the converter common mode voltage.

In another aspect of the invention, a direct AC-AC conversion system is provided, which comprises a first three phase power grid having a first frequency, a second single phase grid having a second frequency which is different from that of the first three phase power grid, and an AC-AC converter assembly as mentioned above. The first three phase power grid may in particular be a 3 x 110 kV 50 or 60 Hz power grid, and the second single phase grid may in particular a 1 x 110 kV / 16.66 Hz or 25 Hz railway grid or a 1 x 15 kV / 16.66 Hz or 25 Hz railway catenary. However, the system may advantageously be used for any AC/AC conversion between systems where frequencies are not close to each other.

The embodiments of the direct AC-AC conversion system may include any of the various embodiments of the inventive AC-AC converter assembly mentioned above, which may also be implemented in the AC-AC conversion system. The resulting embodiments of the AC-AC conversion system also benefit from the advantages of the above mentioned embodiments of the AC-AC converter assembly.

Further aspects, objects and advantages will be apparent from the following detailed description when taken in conjunction with the accompanying drawings, from the drawings as such or the following claims.

### BRIEF DESCRIPTION OF THE DRAWINGS

The accompanying drawings, which are incorporated herein and constitute a part of the specification, illustrate a preferred embodiment of the invention and, together with the description, serve to explain the advantages and principles of the invention without limiting the invention to the specific embodiments shown and described. Like reference numerals are used to refer to like elements throughout the drawings, wherein :
Fig. 1 is a schematic view of a prior art direct AC-AC conversion system based on a Double Star Modular Multilevel Converter (DS MMC) technology;
Fig. 2 is a schematic diagram of a full H bridge submodule for use with the system of Fig. 1 and with systems of present invention;
Fig. 3 is a schematic view of a direct AC-AC conversion system based on a Single Star Modular Multilevel Converter (SS MMC) technology according to an embodiment of present invention;
Fig. 4 is a schematic view illustrating an example of transformer integration with the direct AC-AC converter assembly used in the AC-AC conversion system shown in Fig. 3;
Fig. 5 is a schematic view of a direct AC-AC conversion system comprising a SS MMC converter and two integrated transformers according to another embodiment of present invention; and
Fig. 6 is a schematic view of a direct AC-AC conversion system comprising a SS MMC converter and an integrated transformer according to still another embodiment of present invention.

### DETAILED DESCRIPTION OF THE INVENTION

Reference will be made below in detail to exemplary embodiments of the invention, examples of which are illustrated in the accompanying drawings. Wherever possible, the same reference characters used throughout the drawings refer to the same or like parts. Although exemplary embodiments of present invention are described with respect to the interconnection of power and railway grids, embodiments of the invention are also applicable for use with other networks which have different network frequencies and require interconnection.

Fig. 1 is a schematic view of a prior art direct alternating current to alternating current (AC-AC) conversion system 1 which can be used for interconnection of a three phase high power grid 2, such a 3 x 110 kV / 50 Hz utility grid, with a single phase railway grid 3 which is typically a 1 x 110 kV / 16.66 Hz grid. The direct AC-AC conversion system 1 comprises a railway grid coupling, also known as an intertie 4, which is based on a conventional Double Star Modular Multilevel Converter (DS MMC) technology.

As shown in Fig. 1, the intertie 4 comprises a three phase transformer 6, a direct AC-AC MMC converter 7 and a single phase transformer 8. The three phase transformer 6 is provided for coupling and matching the voltage level of the MMC converter 7 to the power grid 2 which is connected to the primary side terminals of the three phase transformer 6. The primary windings 9 and the secondary windings 11 of the three phase transformer 6 are each arranged in star topology and the terminals of the secondary windings 11 are connected to respective three phase AC terminals 12a, 12b and 12c of the MMC converter 7.

The converter 7 comprises six converter arms 13a-f, two of which, an upper and a lower one 13a, 13b and 13c, 13d and 13e, 13f, respectively, forming a respective phase branch 14a, 14b and 14c, respectively, of the MMC converter 7. Each phase branch 14a, 14b, 14c extends between a first star or neutral point 16, at which the upper converter arms 13a, 13c, 13e in Fig. 1 are connected to each other, and a second star or neutral point 17 where the lower converter arms 13b, 13d, 13e in Fig. 1 are connected to each other. The converter 7 may thus be called a double star converter.

As further shown in Fig. 1, each converter arm 13a-f comprises a plurality of serially connected converter submodules or cells 18. The voltage between the first and second neutral points 16, 17 or voltages among the three phase AC terminals 12a, 12b and 12c of the MMC converter 7 can be changed dynamically in a decoupled manner by varying the switching states of the individual submodules 18. The number of the converter submodules 18 determines the available number of converter switching states which allow fine voltage steps and voltage waveforms of high quality and high voltage levels to be generated. Additionally the converter modules can be switched using Pulse With Modulation (PWM) method in order to increase accuracy of the produced voltage in cases when the number of modules is relatively small. Therefore, the converter 7 is a modular multilevel converter, which is also called MMC or M2C.

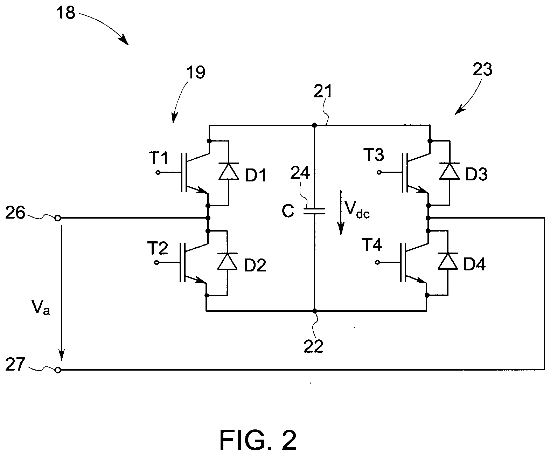

Various configurations for the submodules 18, which are suitable to be used with MMC converters, are known in the prior art. Conventionally, in the direct AC-AC MMC converter assembly 7 shown in Fig. 1 so called full or H bridge circuits are used as shown in Fig. 2.

Referring to Fig. 2, a submodule 18 for use in the MMC converter 7 of Fig. 1, or in the MMC converters of present invention as described in more detail below, is shown which has a full or H bridge configuration. The submodule 18 comprises a first series connection 19 of two power semiconductor switches T1, T2, which is arranged between a first and a second direct current (DC) voltage node 21, 22 of the submodule 18, a second series connection 23 of two power semiconductor switches T3, T4 connected in parallel to the first series connection 19, and a capacitor C, 24 connected in parallel to the first and second series connections 19, 23. Each power semiconductor switch T1, T2, T3, T4 has a freewheeling diode D1, D2, D3, and D4, respectively, assigned thereto, which is connected in antiparallel to the respective switch T1-T4 and serves to carry operating current in case the corresponding switch is open and to protect the power semiconductor switch against overvoltages which would be generated by abrupt interruption of the current.

The semiconductor power switches T1-T4 are controllable switches which are preferably formed by IGBTs (Insulated Gate Bipolar Transistors) or other suitable transistors, such as field effect transistors, in particular MOSFETs, Gate-Turn-Off (GTO) thyristors, Integrated Gate-Commutated Thyristors (IGCTs). Other comparable switchable electronic components may be used.

As may be seen in Fig. 2, the emitter of the first power semiconductor switch T1 is connected to the collector of the second power semiconductor switch T2, wherein the connection point forms a first AC terminal 26 of the submodule 18, which can be alternatively connected to either the positive 21 or the negative 22 DC bus capacitor terminal. Similarly, the emitter of the third power semiconductor switch T3 is connected to the collector of the fourth power semiconductor switch T4, wherein the connection point forms a second AC terminal 27 of the submodule 18 which can be alternatively connected to either the positive 21 or the negative 22 dc bus capacitor terminal.

Capacitor C, which may also be called DC link capacitor of the submodule 18, forms a DC bus (link) between its positive 21 and negative terminals. It serves as an energy storage and a stiff voltage source. The DC voltage v_{dc} at the capacitor C is always positive due to the provision of the freewheeling diodes D1-D4 and, depending on the rating and application, may be several hundred Volt or several kV. The terminal voltage vₐ between the AC terminals 26, 27 of the submodule 18 can assume substantially the values -v_{dc}, +v_{dc} or 0. The DC voltage v_{dc} at the capacitor C, 24 can increase and decrease. A current through the submodule 14 can, in principle, flow in both directions, i.e. from terminal 26 to terminal 27 or vice versa (4 quadrant operation).

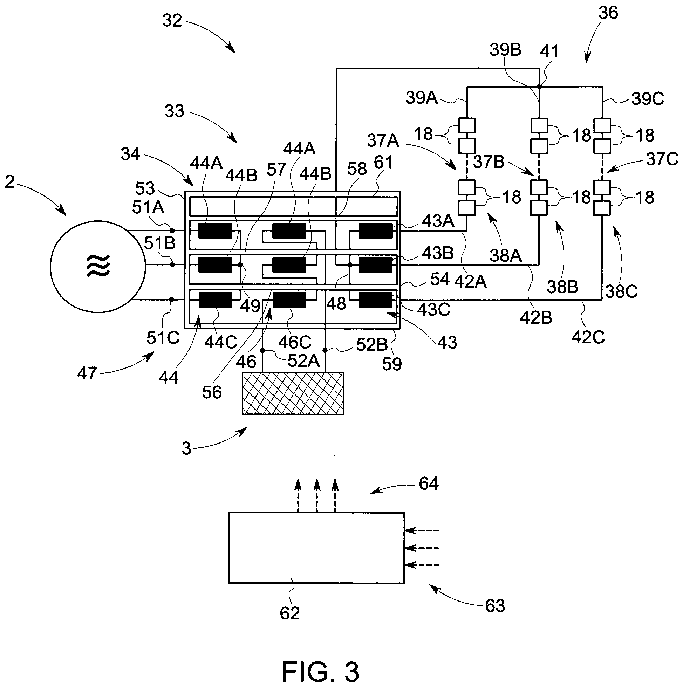

As already mentioned above, the submodule 18 in the form of the H or full bridge can be used in the direct double star MMC converter shown in Fig. 1 as well as in the direct single star MMC converter topology of present invention discussed in more detail in connection with Figs. 3 through 6 below.

Returning to Fig. 1, the direct AC-AC conversion system 1 further comprises the single phase transformer 8 which serves to match the voltage at the railway grid side of the MMC converter 7 to the required voltage level of the railway grid 3. A primary side winding 28 of the single phase transformer 8 is connected between the first and second star or neutral points 16, 17, while the secondary side winding 29 of the single phase transformer 8 is connected to the railway grid 3.

During use, the single phase railway grid 3 is operated at a frequency of 16.66 Hz and the high voltage power grid is operated at 50 Hz, for example. Each converter arm has to reproduce AC voltage components at both 50 Hz and 16.7 Hz. The arm AC voltages at 50 Hz constitute a 3 balanced phase system. The arm voltage components at 16.66 Hz constitute zero sequence (common mode) voltage system. The 16.66 Hz voltage components in all converter arms are the same and equal to one half of the desired railway side voltage.

The voltage matching transformers shown in Fig. 1 are optional. They may be used, if needed, for galvanic isolation of the two grids or to have freedom to select arbitrarily voltage rating of the direct double star AC-AC MMC converter 7.

While the direct AC-AC convention system 1 shown in Fig. 1 has a good conversion efficiency, it also has a high number of converter arms 13a-f and submodules 18 therein. The high number of components increases costs for implementation and operation as well as the space required to accommodate same. Moreover, as is further shown in Fig. 1, reactors 31 are necessarily included in each converter arm 13a-f. The reactors 31 are required to smooth currents in the converter arms 13a-f during operation and to reduce or allow active control of circulating currents which inevitably flow between the converter arms 13a-f due to the double star circuit configuration of the MMC converter 7. Further, the energy stored in the arm reactors 31 increases overvoltage stress produced in case of faults, which may build up to the insulation test voltages.

Fig. 3 shows a direct AC-AC conversion system 32 according to a first embodiment of present invention, which is designed to avoid or at least reduce the before-mentioned deficiencies and is based on a single star MMC converter topology and integrated transformer. As far as the same components are used in the system 32 of Fig. 3 like in system 1 of Fig. 1, the same reference signs are used and it is at least supplementarily referred to the discussion given above for the system 1 to avoid repetitions.

As with the system 1 of Fig. 1, the direct AC-AC conversion system 32 of Fig. 3 can be used for interconnection of a first three phase high power grid 2, such as a 3 x 110 kV / 50 Hz utility grid, with a second single phase railway grid 3 which is typically a 1 x 110 kV / 16.66 Hz grid. The direct AC-AC conversion system 32 comprises a railway grid coupling or intertie 33, generally called herein as an AC-AC converter assembly, which is based on the Single Star Modular Multilevel Converter (SS MMC) technology proposed herein.

In particular, the AC-AC converter assembly 33 in the embodiment of Fig. 3 comprises a single transformer arrangement 34 and an MMC converter 36 which in present case is a single star converter. The MMC converter 36 comprises only three converter arms 37a-c which define the phase branches 38a-c of the converter 36 and substantially correspond to the upper converter arms 13a-c in the system 1 of Fig. 1, for example.

The converter arms 37a-c are connected to each other at their first ends 39a-c forming a first star or neutral point 41 of the MMC converter 36 and the entire AC-AC converter assembly 33. The converter arms 37a-c further have second ends 42a-c which are connected to the transformer arrangement 34.

Each converter arms 37a-c comprises a series connection of submodules or cells 18, which in the preferred embodiment are formed by the symmetrical full or H bridge submodules 18 shown in Fig. 2 and discussed in connection therewith. In order to avoid repetitions, reference is made to the description of the full H bridge submodule 18 given above. Although the full H bridge configuration of submodule 18 is described for use with the direct AC-AC conversion system 32 of any of the embodiments of present invention shown in Figs. 3 through 6, a skilled person will easily recognize that, depending on the application and the respective requirements, modified versions of the submodule 18, like asymmetric cells, mixed cells, clumped diode cells, etc., might also be used where possible.

As shown in Fig. 3, the transformer arrangement 34 comprises three sets 43, 44 and 46 of three phase windings and a magnetic core arrangement 47 receiving the windings 43, 44 and 46 and having a zero sequence flux path. A first set 43 of windings assigned to the converter 36 side comprises three phase windings 43a, 43b, and 43c connected in star topology. In particular, the phase windings 43a-c are each connected at one side to respective one of said second ends 42a, 42b, and 42c, respectively, of the converter arms 37a-c and at another side to each other forming a second star or neutral point 48 of the AC-AC converter assembly 33. As may be further seen in Fig. 2, the first neutral or star point 41 of the MMC converter 36 and the second star or neutral point 48 of the first set 43 of windings are interconnected providing a 4 wire connection between the MMC converter 36 and the transformer arrangement 34.

The second set 44 of windings assigned to the power grid 2 side comprises phase windings 44a, 44b, 44c connected in star topology such that the windings 44a-c are connected to each at one side forming a star point 49 and the other side of each winding 44a-c provides a respective phase terminal 51a, 51b, and 51c, respectively, for connection to a respective phase terminal of the power grid 2. The second set 44 of three phase windings is inductively coupled to the first set 43 of three phase windings by means of the magnetic core arrangement 47. The second set 44 of windings lacks a neutral connection to its star point 49.

The third set 46 of phase windings assigned to the railway grid 3 side comprises three phase windings 46a, 46b and 46c inductively coupled to the windings 43a-c of the first set 43 of windings via the magnetic core arrangement 47 and serving for connection to the second or railway grid 3. The three phase windings 46a-c of the third set 46 of windings are connected in series to each other forming an open delta topology with the open ends of the series connection forming the terminals 52a,b for connection to the railway grid 3.

As further shown in Fig. 3, the magnetic core arrangement 47 for inductively coupling the sets 43, 44 and 46 of windings to each other is formed by two parallel yokes 53, 54 interconnected by three main limbs 56, 57, and 58, which extend perpendicularly therebetween and receive the windings 43a-c, 44a-c, and 46a-c, and two outer limbs 59, 61 for providing closed magnetic circuits including a zero sequence flux path. This results in a 5 limbs magnetic core arrangement 47.

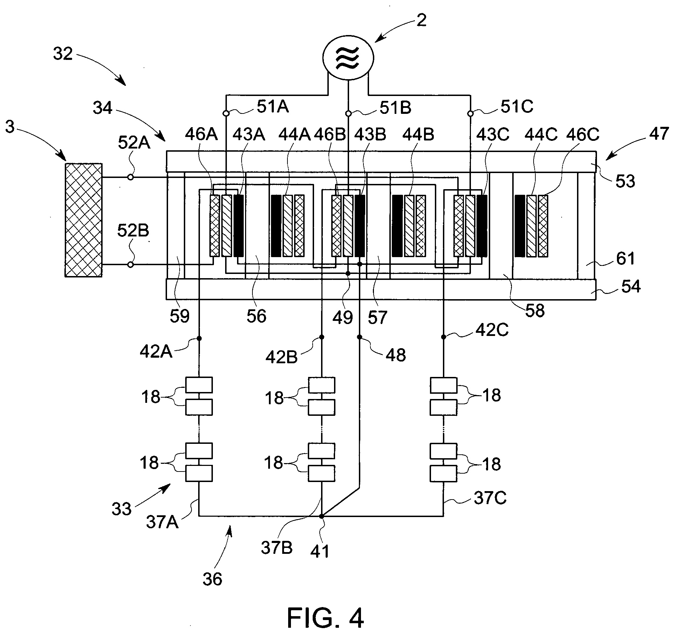

An example of a preferred structure and integration of the transformer arrangement 34 with the single star direct MMC converter 36 is shown in Fig. 4. The same reference signs are used in Figs. 3 and 4 for parts which are identical or similar to each other. As shown in Fig. 4, the windings 43a-c, 44a-c, and 46a-c of the first through third sets 43, 44, 46 of windings are arranged coaxially and concentrically with regard to each other around the main limbs 56, 57, and 58. In particular, a first phase winding 43a of the first set 43 of windings is wound around main limb 56. A first phase winding 44a of the second set 44 of windings is wound around the first winding 43a with an electrical isolation therebetween and a first phase winding 46a of the third set 46 is wound around the first winding 44a of the second set 44 of windings with an electrical isolation therebetween.

Similarly, a second winding 43b of the first set 43 of windings is wound around the middle main limb 57, a second winding 44b of the second set 44 of windings is wound around the winding 44a and a second winding 46b of the third set 46 of windings is wound around the second winding 44b. Further, a third winding 43c of the first set 43 of windings is wound around the third main limb 58, a third winding 44c of the second set 44 is wound around the third winding 43c and a third winding 46c of the third set 46 of windings is wound around the third winding 44c. It will be understood that the order or relative positioning of the windings 43a-c, 44a-c, and 46a-c may be changed.

The windings 43a-c are connected to each other forming the second star point 48 and are further connected to the first star point 41 of the MMC converter 36, while the windings 44a-c of the second set 44 of windings are connected in star with a floating star point 49 unconnected to any neutral or ground connection and the windings 46a-c are connected in delta configuration.

The number of turns of the second set 44 of windings with respect to the number of turns of the first set 43 of windings is suitably selected to achieve voltage matching between the voltage levels of the MMC converter 36 and those of the power grid 2. The number of turns of the third set 46 of windings with respect to the number of turns of the first set 43 of windings is suitably selected to achieve voltage matching between the voltage levels of the MMC converter 36 and those of the railway grid 3.

In the embodiment of Fig. 4, the individual phase winding of the first through third sets 43, 44, 46 of windings are arranged both coaxially and concentrically to each other by being wound one around the other thereby providing a very compact arrangement of merged 50 Hz and 16.66 Hz transformers for both the power and railway grids 2 and 3. In an alternative, the respective windings of the first through third sets 43, 44, 46 of windings assigned to each other could also be disposed adjacent to one another or offset to each other in the longitudinal direction of the main limbs 56, 57, and 58 around which the windings are wound. Such an arrangement is indicated in Fig. 3.

As is also shown in Fig. 3, the direct AC-AC conversion system 32 further comprises a control device 62 for controlling operation of the AC-AC converter assembly 33. In particular, the control device 62 may be configured to control the MMC converter 36 by controlling switching of the power semiconductor switches T1-T4 of the individual submodules 18 of the MMC converter 36 to produce a common mode voltage component at the second or railway grid frequency of 16.66 Hz or 25 Hz, for example, and a differential positive and/or negative sequence voltage component at the first or power grid 2 frequency of 50 Hz or 60 Hz, for example. To this end, the control device also receives sensor signals from various sensors included in the AC-AC converter assembly 33 for sensing operational parameters during operation thereof, such as individual modules DC capacitor voltages, arm converters and grid currents and voltages signals. Although the sensors and the communication lines between the sensors and the control device 62 are not shown in the figures for clarity, the sensor signals received by the control device 62 are indicated by arrows denoted by 63.

Based on the sensor signals 63 and an implemented control algorithm, the control device 62 determines the required switching sequence for the power semiconductor switches of the submodules 18 of the MMC converter 36 to produce the required voltage components for the grids 2 and 3, respectively. Control of the switching of the power semiconductor switches may be based in particular on a pulse width modulation (PWM) method, for example, like a conventional phase or level shifted carrier based PWM or any other method generally known in the art. Control signals provided by the control device 62 to the MMC converter 36 are indicated in Fig. 3 by arrows 64 exiting the control device 62.

The direct AC-AC conversion system of Figs. 3 and 4 operates as follows:
During operation the control device 62 controls the MMC converter 36 to produce a common mode voltage component at the frequency of the second or railway grid 3 and a differential positive and/or negative sequence voltage component at the frequency of the first or power grid 2. The second set 44 of windings at the power grid 2 side is connected in star with no neutral connection, i.e. in a three wires connection. Thus, the zero sequence voltage induced in this winding is isolated and does not interact with the grid current control. Only the differential mode positive (and optionally negative) sequence voltages induced in the grid side winding are available at its terminals 51. Therefore, the control device 62 can control the converter 36 by controlling the grid currents via control of the differential mode positive (and optionally negative) sequence voltages induced in the phase terminals 51 of the power grid 2 side transformer windings 44a-c.

At the same time, since the three-phase windings 46a-c of the railway grid 3 side are connected in series, this results in the voltages available at the railway grid 3 side winding terminals 52 being equal to 3 times the zero sequence voltage induced in each phase winding. The differential mode positive (and negative) sequence voltages induced in the railway grid 3 side set 46 of windings sums up to zero. In other words, the third set 46 of windings is connected in such a way that it removes the differential mode voltages and extracts only the zero sequence components (in exactly opposite manner to that of the second set 44 of windings of the power grid 2). In this way, the differential positive (and negative) sequence and zero sequence systems are fully decoupled from each other. These systems must have different frequencies in the preferred embodiment to provide decupled controllability of active and reactive power flows between the converter and grids. This can be advantageously used to decouple the composite control action provided by the control device 62 to produce the power grid 2 voltage on the one hand and the railway grid 3 voltage on the other.

The first set 43 of windings of the transformer arrangement 34 on the MMC converter 36 side is connected in star. Its terminals are connected to the converter 36 terminals 42a-c. Neutral points 41, 48 of the transformer winding 43 and the converter 36 are interconnected, providing a 4 wire connection. This allows the control device 62 to control simultaneously the differential positive (and possibly negative) sequence AC voltage/currents at the power grid 2 frequency and zero sequence current at the railway grid 3 frequency.

The converter 36 is generally operated in the conventional way. The three arms 37a-c of the MMC converter 36, connected in star, are controlled to produce the common mode voltage component at the railway grid 3 frequency. Thus, due to the 4 wire connection between the converter 36 and the converter side winding 43 of the transformer arrangement 34, a corresponding zero sequence flux will be created in the transformer magnetic core arrangement 47. The zero sequence flux will couple with and induce single phase (zero sequence) voltage in the third set 46 of windings of the railway grid 3 without affecting differential mode voltages in the second set 44 of windings at the power grid 2 side. Voltage matching between the converter 36 voltage and the railway grid 3 is achieved by preselecting adequate ratio of turns of the sets 43, 46 of windings, as mentioned above. In this way, the control device 62 can control the railway grid 3 side voltage by control of the common mode voltage component in the converter arm 37a-c voltages. By changing the magnitude and/or phase of the common mode voltage of the converter arms 37a-c, the control device 62 can control current and power flow on the railway grid 3 side.

For control of the power flow on the power grid 2 side, the three converter arms 37a-c, connected in star, are controlled by the control device 62 to control the differential positive (optionally negative) sequence voltage at the power grid 2 frequency. This three phase voltage system produces only differential mode fluxes in the magnetic core arrangement 47 of transformer arrangement 34 and no zero sequence flux. These differential mode fluxes will induce voltages available only at the terminals 51a-c of the second set 44 of windings at the power grid 2 side without affecting the common mode voltage induced in the third set 46 of windings at the railway grid 3 side. Voltage matching between the converter 36 voltage and power grid 2 is achieved by preselecting adequate ratio of turns of the first set 43 and second set 44 of windings with respect to each other. In this way, the converter can control the power grid 2 side voltage by control of the differential mode voltage component in the converter arm 37a-c voltages. By changing the magnitude and/or phase of the converter 36 differential mode voltage, the converter can control current and power flow on the power grid 2 side.

The power flows on the power grid 2 and railway grid 3 sides must be coordinated so that stored energy in the capacitors C, 24 in the submodules 18 of the converter 36 is maintained at the targeted nominal level. Thus, typically the power flow on either grid side is subordinated to the control of the average voltage or stored energy of capacitor C, 24.

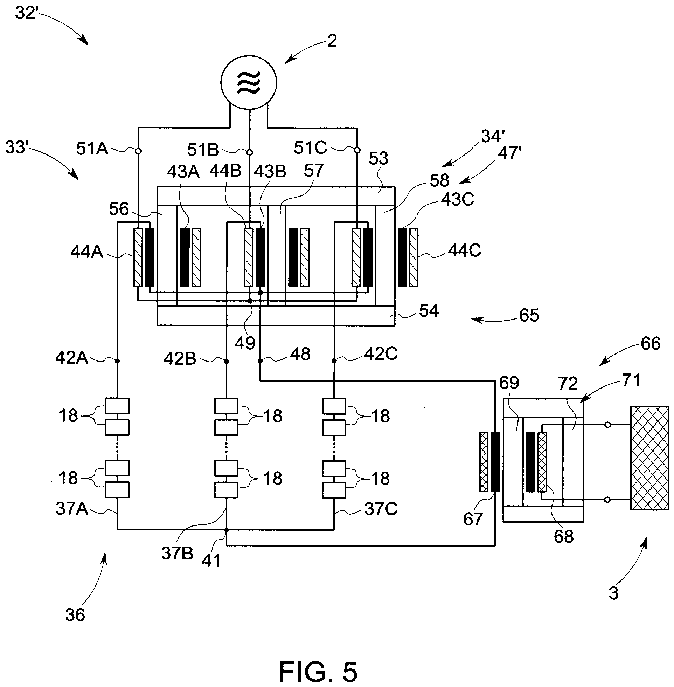

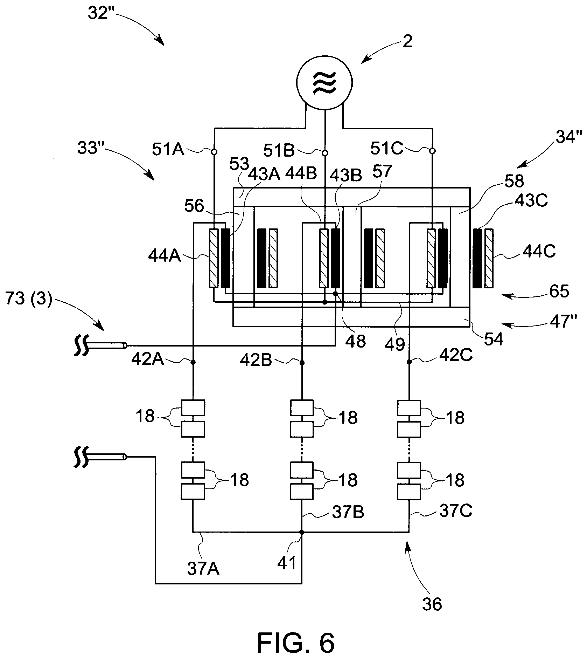

Figs. 5 and 6 show further modified embodiments of a direct AC-AC conversion system of present invention. Insofar as the embodiments comprise parts which are identical or substantially similar to those used in the embodiments shown in Figs. 3 and 4, the same reference signs are also used in Figs. 5 and 6 (possibly adding a prime symbol (') or a double prime symbol (") and it is generally referred to the description of the structure and operation of the parts given above.

The direct AC-AC conversion system 32' shown in Fig. 5 differs from the system 32 of Figs. 3 and 4 substantially only in that the single combined transformer arrangement 34 of Figs. 3 and 4 is replaced by a first three phase differential voltage transformer 65 and a second single phase common mode voltage transformer 66, which are separated from each other. The first transformer 65 is a standard 3 limbs transformer having a magnetic core 47' comprising two yokes 53, 54 and three main limbs 56-58 which extend perpendicularly therebetween and which receive the respective pairs of windings 43a, 44a and 43b, 44b and 43c, 44c, respectively, of the first and second 43, 44 sets of three phase windings.

The second single phase transformer 66 can have any of different core types, like C-I, E-E, etc., and winding arrangements, now known or later developed, which optimize single phase transformer design. In the embodiment of Fig. 5, the second single phase transformer 66 comprises a primary winding 67 connected between the first and second star or neutral points 41, 48 of the AC-AC converter assembly 33' and a secondary winding 68. The primary winding 67 is wound around a main limb 69 of a magnetic core 71 of the single phase transformer 66, while the secondary winding 68 is here wound around the primary winding 67. The magnetic core 71 further comprises an outer limb 72 for closing the magnetic circuit.

The direct AC-AC conversion system 32' of Fig. 5 operates in similar manner as the system of Figs. 3 and 4. The common mode voltage in the first set 43 of windings of the three phase transformer is relatively low. It depends on the common mode magnetizing inductance which is low as there is no common mode magnetic flux path in the transformer core 47' arrangement of the three phase transformer 65. The common mode voltage drop across the three phase transformer 65 does not affect normal operation of the transformer 65 but it contributes to the overall common mode inductance in the common mode path eliminating need for additional inserted inductance on the single phase railway grid 3 side. The single phase common mode voltage component produced between the first and second neutral points 41, 48 of converter 36 is transformed via the single phase transformer 66 to the railway grid 3 voltage level.

In the further embodiment shown in Fig. 6, the MMC converter 36 can be used to supply directly a railway catenary line 73. In this case, the voltage of the MMC converter 36 can be matched to the voltage of the catenary line 73 without any transformation required. Only transformation from the high voltage power grid 2 is required. In contrast, the catenary line 73 can be directly supplied by the common mode voltage produced by the MMC power converter 36. Thus, the catenary supply can be connected between the first and second neutral points 41, 48 of the AC-AC converter assembly 33" as shown in Fig. 6.

Apart from that, the MMC converter 36 can be controlled by the control device 62 to control power flow substantially in the same manner as explained in connection with the embodiments of Fig. 3 through 5 in previous sections. It should be noted that the control device 62 is shown in Fig. 3 only and omitted in Figs. 4 through 6 for convenience only. It will be recognized that the control device 62 is also provided and configured substantially in the same manner in the embodiments of Figs. 4 through 6 as may be also the case for other components which might be shown in one of the figures but omitted in the other figures for clarity or convenience reasons only.

The present invention, thus, provides a new direct AC-AC conversion system 32 and AC-AC converter assembly 33 which is based on the single star MMC converter 36 technology. It avoids the problems associated with indirect AC-AC power conversions while reducing complexity of the circuit topology compared to the double star MMC converter assembly 4. The transformer arrangement 34 provides the basis for coupling the MMC converter to both the power grid 2 and the railway grid 3, or to other AC grids which are to be coupled to each other, but also for decoupling the grids 2, 3 mutually to allow simultaneous voltage matching and frequency conversion therebetween. While one star or neutral point 41 of the AC-AC converter assembly 33 is provided by the MMC converter 36, the second star or neutral point 48 is provided by the transformer arrangement 34 in a magnetical manner. The MMC converter 36 consists of 3 arms 37a-c only instead of 6 arms required for the conventional double star MMC converter 7. With the combination of the single star MMC converter 36 and the transformer arrangement 34 of present invention additional smoothing or circulating current reactors 31 are not needed and can be omitted. The leakage inductance of the transformer arrangement 34 serves as smoothing inductance. This further contributes in the reduction of complexity of the topology and costs of implementation and operation. Overvoltage stresses which may arise during faults are significantly lower due to lower energy stored in the inductances compared to the arm reactors 31 in the double star MMC converters 7. Furthermore, due to the reduced number of converter arms 37a-c, the single star MMC converter 36 can be scaled more easily and appropriately in steps of 3 modules only instead of 6 modules as with the double star MMC 7 to provide a desired power rating. Moreover, circulating currents among the converter arms 37a-c are eliminated with the single star converter configuration.

An AC-AC converter assembly 33, 33', 33" for transferring AC-AC power between a first three phase grid 2, such as a 50 or 60 Hz power grid, and a second single phase grid 3 having a different frequency, such as a 16.66 Hz or 25 Hz railway grid, is provided. The AC-AC converter assembly 33, 33', 33" comprises a single star Modular Multilevel Converter (MMC) 36 and a transformer arrangement 34, 34', 34" for coupling the MMC converter 36 to at least one of the first and second grids 2, 3. The MMC converter 36 comprises only three converter arms 37a-c connected at first ends 39a-c to each other forming a first neutral point 41 of the AC-AC converter assembly 33, 33', 33". Each converter arm 37a-c has a plurality of submodules 18 connected in series between the first end 39a-c and a second end 42a-c, each submodule 18 comprising controllable power semiconductor switches T1-T4 and based on a full H bridge design, for example. The transformer arrangement 34, 34', 34" comprises a first set 43 of three phase windings 43a-c connected in star topology. The three phase windings 43a-c are each connected at one side to respective one of said second ends 21a-c of the converter arms 37a-c and at another side to each other forming a second neutral point 48 of the AC-AC converter assembly 33, 33', 33".

## Claims

1. AC-AC converter assembly for transferring AC-AC power between a first three phase grid (2) and a second single phase grid (3), said first and second grids having different nominal frequencies, said AC-AC converter assembly (33, 33', 33") comprising:
a single star Modular Multilevel Converter (MMC) (36) comprising a total of three converter arms (37a-c) connected at first ends (39a-c) to each other forming a first neutral point (41) of the AC-AC converter assembly (33, 33', 33"), each converter arm (37a-c) having a plurality of bridge submodules (18) connected in series between said first end (39a-c) and a second end (42a-c), each bridge submodule (18) comprising controllable power semiconductor switches (T1-T4);
a transformer arrangement (34; 34') for coupling the MMC converter (36) to the first and second grids (2, 3), said transformer arrangement (34; 65, 66) comprising a first set (43) of three phase windings (43a-c) connected in star topology, wherein said windings (43a-c) are each connected at one side to respective one of said second ends (21a-c) of the converter arms (37a-c) and at another side to each other forming a second neutral point (48) of the AC-AC converter assembly (33, 33', 33") ; and
a control device (62) for controlling operation of the AC-AC converter assembly (33, 33', 33"), said control device (62) being configured to control the MMC converter (36) to produce a common mode voltage component at the second grid (3) frequency and a differential positive and/or negative sequence voltage component at the first grid (2) frequency.

2. AC-AC converter assembly according to claim 1, wherein each submodule (18) of the MMC converter (36) is a full H bridge submodule comprising a first series connection (19) of two power semiconductor switches (T1, T2), a second series connection (23) of two power semiconductor switches (T3, T4) connected in parallel to the first series connection (19), and a capacitor (C, 24) connected in parallel to the first and second series connections (19, 23), each power semiconductor switch (T1-T4) having a corresponding freewheeling diode (D1-D4) connected in antiparallel thereto.

3. AC-AC converter assembly according to claim 1 or 2, wherein said transformer arrangement (34, 34') further comprises a second set (44) of three phase windings (44a-c) for connection to the first grid (2), said second set (33) of three phase windings inductively coupled to the first set (43) of three phase windings.

4. AC-AC converter assembly according to claim 3, wherein said second set (44) of three phase windings is connected in star topology and lacks a neutral connection.

5. AC-AC converter assembly according to claim 3 or 4, wherein said transformer arrangement (34, 34') further comprises a third set (46) of three phase windings (46a-c) for connection to the second grid (3), said third set (46) of three phase windings inductively coupled to the first set (43) of three phase windings.

6. AC-AC converter assembly according to claim 5, wherein said third set (46) of three phase windings is connected in series forming an open delta topology.

7. AC-AC converter assembly according to claim 5 or 6, wherein said first neutral point (41) and said second neutral point (48) of the AC-AC converter assembly (33, 33', 33") are interconnected.

8. AC-AC converter assembly according to anyone of claims 5-7, wherein said transformer arrangement (34, 34') forms a three phase three winding transformer structure comprising a zero sequence flux path.

9. AC-AC converter assembly according to anyone of the preceding claims, wherein said transformer arrangement (34, 34') forms a single 5 limb 3 winding transformer structure having a magnetic core (47) comprising five limbs (56-61), said windings (43a-c, 44a-c, 46a-c) of the first through third sets (43, 44, 46) of three phase windings arranged coaxially and/or concentrically to each other around three (56-58) of the five limbs of the magnetic core (47) and the other two limbs (59, 61) for forming a zero sequence flux path.

10. AC-AC converter assembly according to anyone of claims 1-8, comprising a first three phase differential voltage transformer (65), in particular a three limb transformer, for coupling the single star MMC converter (36) to the first grid (2) and a separate single phase common mode voltage transformer (66) for coupling the single star MMC converter (36) to the second grid (3), wherein the single phase common mode voltage transformer (66) is connected between the first and second neutral points (41, 48) of the AC-AC converter assembly (33').

11. AC-AC converter assembly according to anyone of claims 1-8, comprising a first three phase differential voltage transformer (65), in particular a three limb transformer, for coupling the single star MMC converter (36) to the first grid (2), and wherein said first and second neutral points (41, 48) of the AC-AC converter assembly (33") are arranged as terminals for direct connection to the second grid (3) without using an interposed transformer.

12. AC-AC converter assembly according to anyone of the preceding claims, wherein the number of turns of the first and second grid (2, 3) side windings (44, 46), respectively, with respect to the number of turns of the MMC converter (36) windings (43) is selected to achieve voltage matching between the voltages of the MMC converter (36) and the first and second grid (2, 3), respectively.

13. AC-AC converter assembly according to anyone of the preceding claims, wherein said first grid (2) is a three phase power grid with a grid frequency of 50 Hz and 60 Hz, respectively, and the second grid (3) is a single phase railway grid with a railway grid frequency of about 16,7 Hz or 25 Hz or a railway catenary (73) with a catenary (73) line frequency of 16,7 Hz or 25 Hz.

14. AC-AC conversion system comprising a first three phase power grid (2) having a first frequency, in particular a 3 x 110 kV 50 or 60 Hz power grid, a second single phase grid (3) having a second frequency which is different from that of the first three phase power grid (2), in particular a 1 x 110 kV / 16.66 Hz or 25 Hz railway grid or a 1 x 15 kV / 16.66 Hz or 25 Hz railway catenary, and an AC-AC converter assembly (33, 33', 33") according to anyone of the preceding claims, said AC-AC converter assembly (33, 33', 33") operably arranged between the first and second grids (2, 3).

## Patentansprüche

1. AC-AC-Wandleranordnung zur Umsetzung von Wechselstrom-Wechselstrom-Leistung zwischen einem ersten dreiphasigen Netz (2) und einem zweiten einphasigen Netz (3), wobei das erste und das zweite Netz unterschiedliche Nennfrequenzen aufweisen, wobei die AC-AC-Wandleranordnung (33, 33', 33") aufweist:
einen modularen mehrstufigen Stromrichter (MMC) (36) mit einem einzigen Sternpunkt, der insgesamt drei Stromrichterzweige (37a-c) aufweist, die unter Bildung eines ersten Neutralpunkts (41) der AC-AC-Wandleranordnung (33, 33', 33") an ersten Enden (39a-c) miteinander verbunden sind, wobei jeder Stromrichterzweig (37a-c) mehrere Brücken-Submodule (18) aufweist, die in Reihe zwischen dem ersten Ende (39a-c) und einem zweiten Ende (42a-c) geschaltet sind, wobei jedes Brücken-Submodul (18) steuerbare Leistungshalbleiterschalter (T1-T4) aufweist;
eine Transformatoranordnung (34; 34') zur Kopplung des MMC-Stromrichters (36) mit dem ersten und dem zweiten Netz (2, 3), wobei die Transformatoranordnung (34; 65, 66) einen ersten Satz (43) von drei Phasenwicklungen (43a-c) aufweist, die in Sterntopologie verbunden sind, wobei die Wicklungen (43a-c) jeweils auf einer Seite mit einem jeweiligen der zweiten Enden (21a-c) der Stromrichterzweige (37a-c) und auf einer anderen Seite unter Bildung eines zweiten Neutralpunkts (48) der AC-AC-Wandleranordnung (33, 33', 33") miteinander verbunden sind; und
eine Steuervorrichtung (62) zur Steuerung des Betriebs der AC-AC-Wandleranordnung (33, 33', 33"), wobei die Steuervorrichtung (62) eingerichtet ist, um den MMC-Stromrichter (36) zu steuern, um eine Gleichtaktspannungskomponente mit der Frequenz des zweiten Netzes (3) und eine Mitsystem- und/oder Gegensystem-Gegentaktspannungskomponente mit der Frequenz des ersten Netzes (2) zu erzeugen.

2. AC-AC-Wandleranordnung nach Anspruch 1, wobei jedes Submodul (18) des MMC-Stromrichters (36) ein Voll-H-Brücken-Submodul ist, das eine erste Reihenschaltung (19) von zwei Leistungshalbleiterschaltern (T1, T2), eine zweite Reihenschaltung (23) von zwei Leistungshalbleiterschaltern (T3, T4), die zu der ersten Reihenschaltung (19) parallel geschaltet ist, und einen Kondensator (C, 24) aufweist, der zu der ersten und der zweiten Reihenschaltung (19, 23) parallel geschaltet ist, wobei jeder Leistungshalbleiterschalter (T1-T4) eine zugehörige Freilaufdiode (D1-D4) aufweist, die antiparallel zu diesem geschaltet ist.

3. AC-AC-Wandleranordnung nach Anspruch 1 oder 2, wobei die Transformatoranordnung (34, 34') ferner einen zweiten Satz (44) von drei Phasenwicklungen (44a-c) zur Verbindung mit dem ersten Netz (2) aufweist, wobei der zweite Satz (33) der drei Phasenwicklungen mit dem ersten Satz (43) der drei Phasenwicklungen induktiv gekoppelt ist.

4. AC-AC-Wandleranordnung nach Anspruch 3, wobei der zweite Satz (44) der drei Phasenwicklungen in Sterntopologie geschaltet ist und keine Neutralverbindung aufweist.

5. AC-AC-Wandleranordnung nach Anspruch 3 oder 4, wobei die Transformatoranordnung (34, 34') ferner einen dritten Satz (46) von drei Phasenwicklungen (46a-c) zur Verbindung mit dem zweiten Netz (3) aufweist, wobei der dritte Satz (46) der drei Phasenwicklungen mit dem ersten Satz (43) der drei Phasenwicklungen induktiv gekoppelt ist.

6. AC-AC-Wandleranordnung nach Anspruch 5, wobei der dritte Satz (46) der drei Phasenwicklungen unter Bildung einer offenen Dreieck-Topologie in Reihe geschaltet ist.

7. AC-AC-Wandleranordnung nach Anspruch 5 oder 6, wobei der erste Neutralpunkt (41) und der zweite Neutralpunkt (48) der AC-AC-Wandleranordnung (33, 33', 33") miteinander verbunden sind.

8. AC-AC-Wandleranordnung nach einem beliebigen der Ansprüche 5-7, wobei die Transformatoranordnung (34, 34') eine Dreiphasen-Dreiwicklungs-Transformatorstruktur bildet, die einen Nullsystemflusspfad aufweist.

9. AC-AC-Wandleranordnung nach einem beliebigen der vorhergehenden Ansprüche, wobei die Transformatoranordnung (34, 34') eine einzige 5-Schenkel-3-Wicklungen-Transformatorstruktur mit einem Magnetkern (47) bildet, der fünf Schenkel (56-61) aufweist, wobei die Wicklungen (43a-c, 44a-c, 46a-c) des ersten bis dritten Satzes (43, 44, 46) der drei Phasenwicklungen koaxial und/oder konzentrisch zueinander um drei (56-58) der fünf Schenkel des Magnetkerns (47) herum angeordnet sind und die anderen zwei Schenkel (59, 61) zur Bildung eines Nullsystemflusspfads dienen.

10. AC-AC-Wandleranordnung nach einem beliebigen der Ansprüche 1-8, die einen ersten Dreiphasen-Differenzspannungstransformator (65), insbesondere einen Dreischenkel-Transformator, zur Kopplung des MMC-Stromrichters (36) mit einem einzigen Sternpunkt mit dem ersten Netz (2) und einen gesonderten einphasigen Gleichtaktspannungstransformator (66) zur Kopplung des MMC-Stromrichters (36) mit einem einzigen Stern mit dem zweiten Netz (3) aufweist, wobei der einphasige Gleichtaktspannungstransformator (66) zwischen dem ersten und dem zweiten Neutralpunkt (41, 48) der AC-AC-Wandleranordnung (33') angeschlossen ist.

11. AC-AC-Wandleranordnung nach einem beliebigen der Ansprüche 1-8, die einen ersten Dreiphasen-Differenzspannungstransformator (65), insbesondere einen Dreischenkel-Transformator, zur Kopplung des MMC-Stromrichters (36) mit einem einzigen Sternpunkt mit dem ersten Netz (2) aufweist und wobei der erste und der zweite Neutralpunkt (41, 48) der AC-AC-Wandleranordnung (33") als Anschlüsse zur direkten Verbindung mit dem zweiten Netz (3) ohne Verwendung eines zwischengeschalteten Transformators eingerichtet sind.

12. AC-AC-Wandleranordnung nach einem beliebigen der vorhergehenden Ansprüche, wobei die Anzahl der Windungen der Wicklungen (44, 46) auf der Seite des ersten bzw. zweiten Netzes (2, 3) in Bezug auf die Anzahl der Windungen der Wicklungen (43) des MMC-Stromrichters (36) ausgewählt ist, um eine Spannungsübereinstimmung zwischen den Spannungen des MMC-Stromrichters (36) und des ersten bzw. zweiten Netzes (2, 3) zu erreichen.

13. AC-AC-Wandleranordnung nach einem beliebigen der vorhergehenden Ansprüche, wobei das erste Netz (2) ein dreiphasiges Energienetz mit einer Netzfrequenz von 50 Hz bzw. 60 Hz ist und das zweite Netz (3) ein einphasiges Bahnstromnetz mit einer Bahnstromnetzfrequenz von etwa 16,7 oder 25 Hz oder eine Bahnfahrleitung (73) mit einer Leitungsfrequenz der Fahrleitung (73) von 16,7 Hz oder 25 Hz ist.

14. AC-AC-Umwandlungssystem, das ein erstes dreiphasiges Energienetz (2) mit einer ersten Frequenz, insbesondere ein 3 x 110 kV 50 oder 60 Hz Energienetz, ein zweites einphasiges Netz (3) mit einer zweiten Frequenz, die sich von derjenigen des ersten dreiphasigen Energienetzes (2) unterscheidet, insbesondere ein 1 x 110 kV / 16,66 Hz oder 25 Hz Bahnstromnetz oder eine 1 x 15 kV / 16,66 Hz oder 25 Hz Bahnfahrleitung, und eine AC-AC-Wandleranordnung (33, 33', 33") nach einem beliebigen der vorhergehenden Ansprüche aufweist, wobei die AC-AC-Wandleranordnung (33, 33', 33") zwischen dem ersten und dem zweiten Netz (2, 3) betriebsmäßig angeordnet ist.

## Revendications

1. Ensemble convertisseur CA-CA pour transfert de puissance CA-CA entre un premier réseau électrique triphasé (2) et un second réseau électrique monophasé (3), lesdits premier et second réseaux électriques ayant des fréquences nominales différentes, ledit ensemble convertisseur CA-CA (33, 33', 33") comprenant :
un convertisseur modulaire multiniveaux (MMC) simple étoile (36) comprenant un total de trois bras de convertisseur (37a-c) connectés l'un à l'autre au niveau de premières extrémités (39a-c) en formant un premier point neutre (41) de l'ensemble convertisseur CA-CA (33, 33', 33"), chaque bras de convertisseur (37a-c) comportant une pluralité de sous-modules en pont (18) connectés en série entre ladite première extrémité (39a-c) et une seconde extrémité (42a-c), chaque sous-module en pont (18) comprenant des interrupteurs de puissance à semi-conducteur commandables (T1-T4) ;
un montage transformateur (34 ; 34') destiné à coupler le convertisseur MMC (36) aux premier et second réseaux électriques (2, 3), ledit montage transformateur (34 ; 65, 66) comprenant un premier jeu (43) de trois enroulements de phase (43a-c) connecté en étoile, lesdits enroulements (43a-c) étant connectés chacun d'un côté à une seconde extrémité respective desdites secondes extrémités (21a-c) des bras de convertisseur (37a-c) et de l'autre côté l'un à l'autre en formant un deuxième point neutre (48) de l'ensemble convertisseur CA-CA (33, 33', 33") ; et
un dispositif de commande (62) destiné à commander le fonctionnement de l'ensemble convertisseur CA-CA (33, 33', 33"), ledit dispositif de commande (62) étant configuré pour commander le convertisseur MMC (36) afin de produire une composante de tension en mode commun à la fréquence du second réseau électrique (3) et une composante de tension directe et/ou inverse en mode différentiel à la fréquence du premier réseau électrique (2).

2. Ensemble convertisseur CA-CA selon la revendication 1, dans lequel chaque sous-module (18) du convertisseur MMC (36) est un sous-module en pont en H complet comprenant un premier montage en série (19) de deux interrupteurs de puissance à semi-conducteur (T1, T2), un deuxième montage en série (23) de deux interrupteurs de puissance à semi-conducteur (T3, T4) connecté en parallèle au premier montage en série (19), et un condensateur (C, 24) connecté en parallèle aux premier et deuxième montages en série (19, 23), chaque interrupteur de puissance à semi-conducteur (T1-T4) ayant une diode de roue libre correspondante (D1-D4) qui lui est connectée tête-bêche.

3. Ensemble convertisseur CA-CA selon la revendication 1 ou 2, dans lequel ledit montage transformateur (34, 34') comprend en outre un deuxième jeu (44) de trois enroulements de phase (44a-c) pour la connexion au premier réseau électrique (2), ledit deuxième jeu (33) de trois enroulements de phase étant couplé par induction au premier jeu (43) de trois enroulements de phase.

4. Ensemble convertisseur CA-CA selon la revendication 3, dans lequel ledit deuxième jeu (44) de trois enroulements de phase est connecté en étoile et est dépourvu de connexion de neutre.

5. Ensemble convertisseur CA-CA selon la revendication 3 ou 4, dans lequel ledit montage transformateur (34, 34') comprend en outre un troisième jeu (46) de trois enroulements de phase (46a-c) pour la connexion au second réseau électrique (3), ledit troisième jeu (46) de trois enroulements de phase étant couplé par induction au premier jeu (43) de trois enroulements de phase.

6. Ensemble convertisseur CA-CA selon la revendication 5, dans lequel ledit troisième jeu (46) de trois enroulements de phase est connecté en série, formant une configuration en triangle ouvert.

7. Ensemble convertisseur CA-CA selon la revendication 5 ou 6, dans lequel ledit premier point neutre (41) et ledit deuxième point neutre (48) de l'ensemble convertisseur CA-CA (33, 33', 33") sont interconnectés.

8. Ensemble convertisseur CA-CA selon l'une quelconque des revendications 5 à 7, dans lequel ledit montage transformateur (34, 34') forme une structure de transformateur à trois enroulements triphasés comprenant un chemin de flux homopolaire.

9. Ensemble convertisseur CA-CA selon l'une quelconque des revendications précédentes, dans lequel ledit montage transformateur (34, 34') forme une structure de transformateur unique à 5 branches et 3 enroulements comportant un noyau magnétique (47) à cinq branches (56-61), lesdits enroulements (43a-c, 44a-c, 46a-c) des premier à troisième jeux (43, 44, 46) de trois enroulements de phase étant agencés coaxiaux et/ou concentriques entre eux autour de trois (56-58) des cinq branches du noyau magnétique (47) et les deux autres branches (59, 61) étant destinées à former un chemin de flux homopolaire.

10. Ensemble convertisseur CA-CA selon l'une quelconque des revendications 1 à 8, comprenant un premier transformateur de tension différentiel triphasé (65), en particulier un transformateur à trois branches, destiné à coupler le convertisseur MMC simple étoile (36) au premier réseau électrique (2), et un transformateur de tension en mode commun monophasé séparé (66) destiné à coupler le convertisseur MMC simple étoile (36) au second réseau électrique (3), le transformateur de tension en mode commun monophasé (66) étant connecté entre les premier et deuxième points neutres (41, 48) de l'ensemble convertisseur CA-CA (33').

11. Ensemble convertisseur CA-CA selon l'une quelconque des revendications 1 à 8, comprenant un premier transformateur de tension différentiel triphasé (65), en particulier un transformateur à trois branches, destiné à coupler le convertisseur MMC simple étoile (36) au premier réseau électrique (2), et dans lequel lesdits premier et deuxième points neutres (41, 48) de l'ensemble convertisseur CA-CA (33") sont agencés sous la forme de bornes pour une connexion directe au second réseau électrique (3) sans utiliser un transformateur intercalé.

12. Ensemble convertisseur CA-CA selon l'une quelconque des revendications précédentes, dans lequel le nombre de spires des enroulements (44, 46) côté premier et côté second réseau électrique (2, 3), respectivement, par rapport au nombre de spires des enroulements (43) du convertisseur MMC (36) est sélectionné pour réaliser une adaptation de tension entre les tensions du convertisseur MMC (36) et des premier et second réseaux électriques (2, 3), respectivement.

13. Ensemble convertisseur CA-CA selon l'une quelconque des revendications précédentes, dans lequel ledit premier réseau électrique (2) est un réseau électrique d'alimentation triphasé ayant une fréquence de réseau électrique de 50 Hz et 60 Hz, respectivement, et le second réseau électrique (3) est un réseau électrique ferroviaire ayant une fréquence de réseau électrique ferroviaire d'environ 16,7 Hz ou 25 Hz ou une caténaire ferroviaire (73) ayant une fréquence de ligne de caténaire (73) de 16,7 Hz ou 25 Hz.

14. Système de conversion CA-CA comprenant un premier réseau électrique d'alimentation triphasé (2) ayant une première fréquence, en particulier un réseau électrique d'alimentation de 3 x 110 kV à 50 ou 60 Hz, un second réseau électrique monophasé (3) ayant une seconde fréquence qui est différente de celle du premier réseau électrique d'alimentation triphasé (2), en particulier un réseau électrique ferroviaire de 1 x 110 kV / 16,66 Hz ou 25 Hz ou une caténaire ferroviaire de 1 x 15 kV / 16,66 Hz ou 25 Hz, et un ensemble convertisseur CA-CA (33, 33', 33") selon l'une quelconque des revendications précédentes, ledit ensemble convertisseur CA-CA (33, 33', 33") étant agencé fonctionnellement entre les premier et second réseaux électriques (2, 3).
